# EUROPÄISCHE PATENTSCHRIFT

(11) **EP 2 236 391 B1**
(45) Veröffentlichungstag und Bekanntmachung des Hinweises auf die Patenterteilung: **13.08.2014**
(21) Anmeldenummer: 10157968.8
(22) Anmeldetag: 26.03.2010
(51) Int. Cl.: B62B 3/00

(54) **Transportwagen mit Lenkrollen**
Conveyor trolley with castors
Chariot de transport équipé de roues directrices

(30) Priorität: 30.03.2009 DE 102009014864
(43) Veröffentlichungstag der Anmeldung: 06.10.2010
(73) Patentinhaber: LKE Gesellschaft für Logistik- und Kommunikations- Equipment mbH, 45768 Marl (DE)
(72) Erfinder: Feser, Robert, 45966 Gladbeck (DE); Grigo, Lothar, 59394 Nordkirchen (DE)
(74) Vertreter: Cohausz & Florack

(56) Entgegenhaltungen:
- DE-U1-202004 004 973
- GB-A- 2 423 500

## Beschreibung

Die Erfindung betrifft einen Transportwagen mit einem mindestens drei, vorzugsweise mindestens vier Lenkrollen aufweisenden Fahrgestell und mindestens zwei nicht-lenkbeweglichen Laufrollen, die mittels eines am Fahrgestell gelagerten Hebe- und Absenkmechanismus aus einer Kontaktposition, in welcher sie eine Fahrfläche berühren, auf welcher sich die Lenkrollen abstützen, in eine angehobene Position, in welcher sie die Fahrfläche nicht berühren, anhebbar und umgekehrt absenkbar sind.

Transportwagen, die mitunter auch als Handkarren bezeichnet werden, sind in vielfältigen Ausführungen bekannt. Aus dem Bereich der Automobilfertigung ist es bekannt, Fahrzeugteile, zum Beispiel Windschutzscheiben, Fahrzeugsitze, Scheinwerfer, etc., mittels Transportwagen zu verschiedenen Verteil- bzw. Montagestellen zu transportieren. Dabei kommen insbesondere Transportwagen zum Einsatz, die aneinander gekoppelt werden können, sodass mit relativ geringem Personal- und Zeitaufwand mehrere Transportwagen zusammen im Zugverband bewegt bzw. verfahren werden können.

Um eine gute Rangierbeweglichkeit zu ermöglichen, werden derartige Transportwagen mit Lenkrollen ausgestattet. Eine optimale Rangierbeweglichkeit wird erreicht, wenn sämtliche Laufrollen als Lenkrollen ausgeführt sind. Die Transportwagen können dann sowohl in Längsrichtung als auch quer zu ihrer Längsachse verfahren werden.

Hinsichtlich eines Betriebs im Zugverband sind jedoch Transportwagen, deren Laufrollen ausnahmslos als Lenkrollen ausgeführt sind, schwierig zu handhaben, sodass derartige Transportwagen auch mit Verriegelungsvorrichtungen zur Festsetzung der in Fahrrichtung hinteren Lenkrollen ausgerüstet werden. Auf diese Weise wird die Spurtreue solcher Transportwagen im Zugbetrieb verbessert.

So ist beispielsweise aus der DE 203 05 294 U1 ein Transportwagen bekannt, der hinsichtlich ihrer Lenkrichtung feststellbare Lenkrollen und eine Deichsel zum Anschluss des Transportwagens an ein Zugfahrzeug oder an einen anderen Transportwagen aufweist. Die Deichsel ist dabei zwischen einer für den Zugbetrieb vorgesehenen Zugstellung und einer Normalstellung, welche bei vom Zug abgekoppeltem Transportwagen vorgesehen ist und in welcher sich die Deichsel aufrecht nach oben erstreckt, beweglich. Zur Lenkfixierung der Lenkrollen ist eine Raste vorgesehen, wobei zwischen der Deichsel und der Raste Übertragungsmittel vorhanden sind, durch die ein mit einer Lenkrolle zusammenwirkendes Rastelement in seine Raststellung bewegt wird, wenn die Deichsel in die Zugstellung bewegt wird, und durch die das Rastelement in eine die Lenkrolle lenkbeweglich freigebende Freigabestellung bewegt wird, wenn die Deichsel in ihre Normalstellung bewegt wird.

Die für das Ankoppeln erforderliche Bewegung der Deichsel des aus der DE 203 05 294 U1 bekannten Transportwagens ist allerdings nur möglich, wenn die festzusetzenden Lenkrollen die Lenkstellung für eine Geradeausfahrt des Transportwagens einnehmen. Die festzusetzenden Lenkrollen nehmen während des Gebrauchs des Transportwagens jedoch häufig eine von der Geradeausfahrt abweichende Lenkstellung ein, so dass die Handhabung dieses bekannten Transportwagens, insbesondere im beladenen Zustand, wenn sich die Lenkrollen aufgrund der Transportlast nur mühsam ausrichten lassen, unbefriedigend ist.

Aus der DE 20 2004 004 973 U1, die als nächstliegende Stand der Technik gesehen ist, ist ein Transportwagen zum Transport großvolumiger sowie sperriger Güter bekannt, der ein mit einer Deichsel und einer Anhängevorrichtung ausgerüstetes Untergestell aufweist. An dem Untergestell sind frontseitig ein aus zwei Lenkrollen bestehendes Rollenpaar, heckseitig ein aus zwei Lenkrollen bestehendes Rollenpaar und mittig ein aus zwei Bockrollen bestehendes Rollenpaar angeordnet, wobei die vorderen Lenkrollen fest zum Untergestell verbunden sind, während die hinteren Lenkrollen sowie die Bockrollen jeweils fest zu Traversen verbunden sind, wobei die Traversen über Lagerungen beidseitig an einer Querachse beweglich gelagert sind. Die Querachse ist dabei fest am Untergestell angeordnet und als H-förmig gestaltete Schwinge ausgebildet. Die anheb- und absenkbaren Bockrollen dienen der Verbesserung der Spurtreue des Transportwagens und können mittels Feststelleinrichtungen in der angehobenen Position arretiert werden. Das Anheben der Bockrollen dieses Transportwagens erfordert jedoch insbesondere dann, wenn der Transportwagen beladen ist, einen relativ hohen Kraftaufwand.

Der vorliegenden Erfindung liegt die Aufgabe zugrunde, einen Transportwagen der eingangs genannten Art bereitzustellen, der bei Verwendung im Zugbetrieb eine hohe Spurtreue bietet, der bei aus dem Zugverband abgekoppelter Verwendung quer zu seiner Längsachse verfahrbar ist und dessen nicht-lenkbeweglichen Laufrollen (Bockrollen) auch bei Beladung relativ einfach in eine angehobene Position bringbar sind.

Gelöst wird diese Aufgabe durch einen Transportwagen mit den Merkmalen des Anspruchs 1.

Der erfindungsgemäße Transportwagen hat ein Fahrgestell, das mindestens drei, vorzugsweise mindestens vier Lenkrollen sowie mindestens zwei nicht-lenkbewegliche Laufrollen (Bockrollen) aufweist. Die nicht-lenkbeweglichen Laufrollen sind mittels eines am Fahrgestell gelagerten Hebe- und Absenkmechanismus aus einer Kontaktposition, in welcher sie eine Fahrfläche berühren, auf welcher sich die Lenkrollen abstützen, in eine angehobene Position, in welcher sie die Fahrfläche nicht berühren, anhebbar und umgekehrt absenkbar. Erfindungsgemäß ist der Hebe- und Absenkmechanismus mit mindestens einer Einstellvorrichtung versehen, mittels welcher der Anpressdruck mindestens einer der nicht-lenkbeweglichen Laufrollen gegen die Fahrfläche einstellbar ist, wobei der Hebe- und Absenkmechanismus mindestens einen Träger umfasst, der wippenartig an dem Fahrgestell gelagert ist und Hebelarme definiert, wobei an einem der Hebelarme mindestens eine der nicht-lenkbeweglichen Laufrollen montiert ist und an einem anderen der Hebelarme die mindestens eine Einstellvorrichtung zum Einstellen des Anpressdruckes angreift.

Die mindestens zwei nicht-lenkbeweglichen Laufrollen, die mittels des Hebe- und Absenkmechanismus für den Zugbetrieb des Transportwagens auf die Fahrfläche abgesenkt werden können, bewirken eine verbesserte Spurtreue des Transportwagens gegenüber dem Zustand, in welchem der Transportwagen ausschließlich auf seinen Lenkrollen verfahren wird. Andererseits können die die Spurtreue verbessernden, nicht-lenkbeweglichen Laufrollen bei Bedarf mittels des Hebe- und Absenkmechanismus angehoben werden, so dass sie dann die Fahrfläche nicht berühren und der Transportwagen somit auf relativ kleiner bzw. kleinster Fläche in beliebige Richtung, insbesondere quer zu seiner Längsachse verfahren werden kann.

Die Einstellvorrichtung ermöglicht eine Anpassung des Anpressdruckes an das jeweilige Wagengewicht und damit eine Optimierung der Fahreigenschaften des Transportwagens. Der mindestens eine wippenartig gelagerte Träger des Hebe- und Absenkmechanismus, an dessen einem Hebelarm mindestens eine der nicht-lenkbeweglichen Laufrollen montiert ist und an dessen anderem Hebelarm die Einstellvorrichtung zum Einstellen des Anpressdruckes angreift, ermöglicht ein relativ einfaches Anheben der nicht-lenkbeweglichen Laufrollen auch dann, wenn der Transportwagen beladen ist.

Nach einer bevorzugten Ausgestaltung der Erfindung ist vorgesehen, dass die mindestens zwei nicht-lenkbeweglichen Laufrollen (Bockrollen) mittig oder nahe der Mitte zwischen vorderen und hinteren Lenkrollen angeordnet. Hierdurch ergibt sich im Zugbetrieb, bei in Bodenkontakt abgesenkter nicht-lenkbeweglicher Laufrolle, eine hohe Spurtreue sowie zugleich ein relativ geringer Wendekreis für den aus entsprechenden Transportwagen gebildeten Zug. Die Anordnung der nicht-lenkbeweglichen Laufrollen mittig oder nahe der Mitte zwischen vorderen und hinteren Lenkrollen verbessert die Spurtreue des erfindungsgemäßen Transportwagens unabhängig davon, ob der Wagen vorwärts oder rückwärts verfahren wird. Eine hohe bzw. verbesserte Spurtreue ist bei einem aus entsprechenden Transportwagen gebildeten Zug somit unabhängig oder weitgehend unabhängig davon, an welchem der beiden Zugenden die Zugmaschine den Zug zieht.

In funktionaler Hinsicht ist es ferner günstig, wenn der Hebe- und Absenkmechanismus in weiterer Ausgestaltung mit mindestens einer Druckfeder versehen ist, welche die nicht-lenkbeweglichen Laufrollen gegen die Fahrfläche vorspannt. Die Druckfeder ermöglicht eine stufenlose Einstellung der gegen den Fahrboden gerichteten Anpresskraft der nicht-lenkbeweglichen Laufrollen, um die Fahreigenschaften des Transportwagens an dessen Gewicht bzw. Transportlast anzupassen. Insbesondere lässt die Druckfeder in der Absenkstellung des Hebe- und Absenkmechanismus in gewissen Grenzen eine Positionsanpassung der nicht-lenkbeweglichen Laufrollen zu, so dass letztere auch bei unebenem Fahrboden, z.B. im Bereich einer flachen Mulde, den Boden mit ausreichender Anpresskraft berühren.

Vorzugsweise umfasst der Hebe- und Absenkmechanismus mindestens zwei Träger, die jeweils wippenartig an dem Fahrgestell gelagert sind und jeweils mindestens zwei Hebelarme definieren, wobei an dem einen Hebelarm des jeweiligen Trägers eine der nicht-lenkbeweglichen Laufrollen (Bockrollen) montiert ist und an dem anderen Hebelarm des jeweiligen Trägers eine Einstellvorrichtung zum Einstellen des Anpressdruckes angreift. Die Träger sind dabei vorzugsweise mittels voneinander getrennter Achsen schwenkbar am Fahrgestell gelagert. Hierdurch ergibt sich für die Bockrollen eine schwenkbewegliche Einzelradaufhängung, so dass die jeweilige Bockrolle auch auf rampenförmigen oder welligen Fahrstrecken Bodenkontakt halten kann, was dem erfindungsgemäßen Transportwagen ein hervorragendes Fahrverhalten verleiht.

Nach einer weiteren bevorzugten Ausgestaltung der Erfindung ist vorgesehen, dass der Hebe- und Absenkmechanismus eine Achse, vorzugsweise eine etwa in Wagenmitte angeordnete Mittelachse umfasst, die drehbar an dem Fahrgestell gelagert ist und einen Nocken trägt, der an dem die mindestens eine nicht-lenkbewegliche Laufrolle tragenden Träger angreift, wobei an der Achse ein davon radial abstehender Hebel befestigt ist, an dem eine Schubstange angelenkt ist, und wobei das den Hebel mit der Schubstange verbindende Gelenk beim Anheben der Laufrolle aus der Kontaktposition in die angehobene Position über einen Totpunkt bewegt wird. Hierdurch ergeben sich stabile Lagen des Trägers mit der daran gelagerten nicht-lenkbewegliche Laufrolle in der angehobenen sowie in der abgesenkten Stellung der Laufrolle.

Die Achse bzw. Mittelachse ist dabei vorzugsweise in an dem Fahrgestell montierten oder ausgebildeten Gleit- und/oder Wälzlagern gehalten.

Um eine komfortable Bedienung des Hebe- und Absenkmechanismus zu ermöglichen, sieht eine weitere bevorzugte Ausgestaltung des erfindungsgemäßen Transportwagens vor, dass an der drehbar gelagerten Achse bzw. Mittelachse mindestens ein, vorzugsweise mindestens zwei unterschiedlich zueinander abgewinkelte Fußhebel drehstarr befestigt sind.

Zur Handhabung des Transportwagens im Rangierbetrieb bzw. außerhalb des Zugverbandes ist das Fahrgestell zweckmäßiger Weise mit mindestens einem nach oben ragenden, stiel- oder bügelförmig ausgebildeten Handgriff versehen.

Auch ist es zweckmäßig, wenn gemäß einer weiteren bevorzugten Ausgestaltung mindestens eine der Lenkrollen des Transportwagens mit einer durch ein Pedal betätigbaren Bremse versehen ist.

Weitere bevorzugte und vorteilhafte Ausgestaltungen des erfindungsgemäßen Transportwagens sind in den Unteransprüchen angegeben.

Nachfolgend wird die Erfindung anhand einer ein Ausführungsbeispiel darstellenden Zeichnung näher erläutert. Es zeigen:
- Fig. 1: einen erfindungsgemäßen Transportwagen mit in Zugstellung befindlicher Deichsel, in perspektivischer Ansicht;
- Fig. 2: den Transportwagen der Fig. 1 mit in aufrechter Stellung (Normal- oder Rangierstellung) befindlicher Deichsel, in perspektivischer Ansicht;

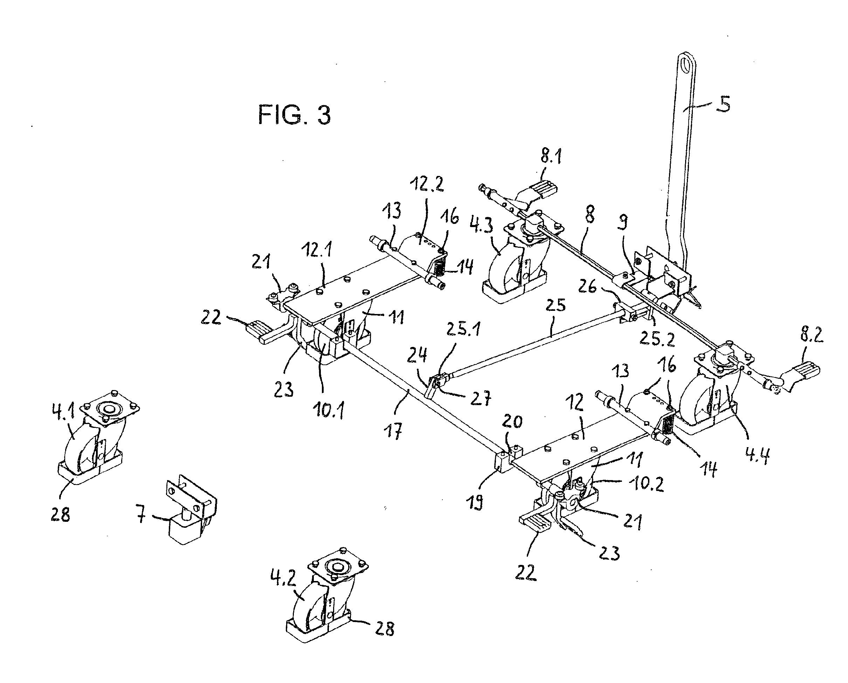

- Fig. 3: diverse Einzelteile des Transportwagens der Fig. 1 bzw. 2 in perspektivischer Draufsicht;
- Fig. 4: die Einzelteile des Transportwagens der Fig. 3 in perspektivischer Unteransicht;

- Fig. 5: den Transportwagen der Fig. 2 mit angehobenen nicht-lenkbeweglichen Laufrollen in Seitenansicht;
- Fig. 6: den Transportwagen der Fig. 5 in einer Längsschnitt-Seitenansicht;
- Fig. 7: einen Abschnitt des Hebe- und Absenkmechanismus für die nicht-lenkbeweglichen Laufrollen in Längsschnitt-Seitenansicht;
- Fig. 8: den Transportwagen der Fig. 1 mit abgesenkten nicht-lenkbeweglichen Laufrollen in Seitenansicht;
- Fig. 9: den Transportwagen der Fig. 8 in einer Längsschnitt-Seitenansicht; und
- Fig. 10: den Abschnitt des Hebe- und Absenkmechanismus gemäß Fig. 7 in abgesenkter Stellung, in Längsschnitt-Seitenansicht.

Der in der Zeichnung dargestellte Transportwagen 1 hat ein rahmenartiges, längliches Fahrgestell 2. Das vorzugsweise aus Metall gefertigte Fahrgestell 2 weist zwei äußere Längsträger 2.1, 2.2 auf, die durch äußere und innere Querträger 2.3, 2.4, 2.5, 2.6 mit einander verbunden sind. Die inneren Querträger 2.5, 2.6 sind dabei durch innere Längsträger 2.7, 2.8 mit einander verbunden, die parallel zu den äußeren Längsträgern 2.1, 2.2 verlaufen.

An den äußeren und inneren Querträgern 2.3, 2.4, 2.5, 2.6 sind Platten 3 angeschweißt oder angeschraubt, die Bohrungen zur Befestigung von vier lenkbeweglichen, als Lenkrollen 4.1, 4.2, 4.3, 4.4 bezeichneten Laufrollen aufweisen. An dem äußeren Querträger 2.4 ist eine Deichsel 5 schwenkbar gelagert. Die Deichsel 5 kann aus einer Zugstellung in eine im Wesentlichen aufrechte Normal- oder Rangierstellung hoch geschwenkt bzw. umgekehrt heruntergeschwenkt werden. Des Weiteren ist das Fahrgestell 2 mit einem nach oben ragenden bügelförmig ausgebildeten Handgriff 6 versehen. Die Enden des Handgriffs 6 sind an dem äußeren Querträger 2.4 befestigt oder in daran angebrachten Steckaufnahmen eingesteckt. An dem anderen äußeren Querträger 2.3 ist eine Anhängevorrichtung oder Kupplung 7 zum Anhängen einer Deichsel eines entsprechenden Transportwagens montiert.

Die beiden nahe der Deichsel 5 bzw. des Handgriffs 6 angeordneten Lenkrollen 4.3, 4.4 sind jeweils mit einer Bremse versehen. Hierzu sind im Bereich der im Wesentlichen vertikal verlaufenden Drehachsen der Lenkrollen 4.3, 4.4 federbelastete Bremsbolzen vorgesehen, die parallel zu der jeweiligen Drehachse beweglich gelagert sind und durch Drehen eines in den äußeren Längsträgern 2.1, 2.2 gelagerten Mehrkantstabes 8, beispielsweise eines Sechskantstabes, auf die Räder der Lenkrollen 4.3, 4.4 abgesenkt werden können. Die Betätigung der Bremse bzw. der den Lenkrollen 4.3, 4.4 zugeordneten Bremsbolzen erfolgt durch Herunterdrücken einer der beiden an dem Mehrkantstab 8 drehstarr befestigten Bremspedalen 8.1, 8.2, wodurch die Bremsbolzen gegen die Kraft einer Druck- oder Vorspannfeder bewegt werden. Durch Betätigung des linken oder rechten Bremspedals 8.1 oder 8.2 werden somit stets beide Lenkrollen 4.3 und 4.4 festgesetzt. Zum Lösen der Bremse ist der Mehrkantstab 8 mit einem Hebel 9 versehen.

Des Weiteren weist der Transportwagen 1 nicht-lenkbewegliche Laufrollen (Bockrollen) 10.1, 10.2 auf, die mittels eines am Fahrgestell 2 gelagerten Hebe- und Absenkmechanismus aus einer Kontaktposition oder abgesenkten Position, in welcher die Laufrollen 10.1, 10.2 den Boden berühren, in eine angehobene Position, in welcher sie den Boden nicht berühren, anhebbar und umgekehrt absenkbar sind. Die Laufrollen 10.1, 10.2 sind zwischen den inneren Querträgern 2.5, 2.6 des Fahrgestells bzw. im Bereich zwischen den am Querträger 2.5 montierten Lenkrollen 4.1, 4.2 und den am Querträger 2.6 montierten Lenkrollen 4.3, 4.4 angeordnet.

Die Räder der mittleren Laufrollen 10.1, 10.2 sind - wie die Räder der Lenkrollen 4.1, 4.2, 4.3, 4.4 - in gabelförmigen Halterungen 11 drehbar gelagert, wobei die Halterungen 11 jedoch drehstarr an Trägern 12 befestigt sind, die an horizontal verlaufenden Achsen 13 schwenkbar am Fahrgestell 2 gelagert sind. Die Träger 12 bestehen aus länglichen, biegesteifen Metall- oder Stahlblechen, die gekröpft sind, wobei in oder nahe der unteren Kehle des gekröpften Bereichs ein Rundstahlstab als horizontal verlaufende Achse 13 befestigt ist. Die Achsen (Rundstahlstäbe) 13 sind an den parallel zueinander verlaufenden Längsträgern 2.1, 2.2, 2.7, 2.8 in Gleitlagern drehbar gelagert. Die Lenkrollen 4.1, 4.2, 4.3, 4.4 sind unabhängig von den die nicht-lenkbeweglichen Laufrollen 10.1, 10.2 tragenden Trägern 12 an dem Fahrgestell 2 montiert.

Der jeweilige Träger 12 ist somit wippenartig am Fahrgestell 2 gelagert, wobei er einen längeren und einen kürzeren Hebelarm definiert. An dem längeren Hebelarm 12.1 ist die nicht-lenkbewegliche Laufrolle 10.1 bzw. 10.2 montiert, während an dem kürzeren Hebelarm 12.2 eine Einstellvorrichtung angreift, mittels welcher der Anpressdruck der Laufrolle 10.1 bzw. 10.2 gegen den Boden einstellbar ist. Die Einstellvorrichtung umfasst Druckfedern 14, welche die mittlere Laufrolle 10.1, 10.2 gegen die Fahrfläche vorspannen. Die Druckfedern 14 sind mit dem kürzeren Hebelarm 12.2 des Trägers 12 verbunden und stützen sich mit ihrem anderen Ende an einem Widerlager 15, z.B. in Form eines Abstützblechs ab, das an den Längsträgern 2.1, 2.2, 2.7, 2.8 befestigt ist. Der jeweiligen Druckfeder 14 ist eine Einstellschraube 16 zugeordnet, auf die eine die Druckfeder 14 belastende Mutter aufgeschraubt ist. Durch Drehen der Mutter kann der auf die mittlere Laufrolle 10.1, 10.2 wirkende Anpressdruck eingestellt werden.

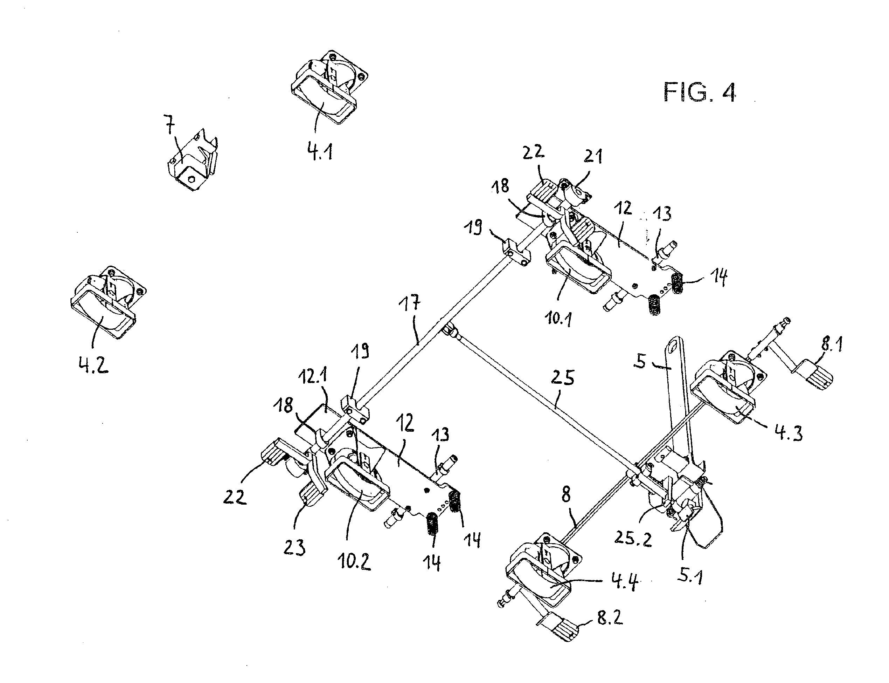

Der Hebe- und Absenkmechanismus umfasst ferner eine Achse 17, die quer zu den Längsträgern 2.1, 2.2, 2.7, 2.8 verläuft und an dem Fahrgestell 2 gelagert ist. In Fig. 4 ist zu sehen, dass die Achse 17 Nocken 18 aufweist, die an der Unterseite der Träger 12, nahe dem freien Ende des längeren Hebelarms 12.1, angreifen. In ihrem den Träger 12 berührenden Kontaktbereich sind die Nocken 18 vorzugsweise mit drehbaren Rollen versehen, um die Reibung zwischen dem Nocken 18 und dem jeweiligen Träger 12 bei der Betätigung des Hebe- und Absenkmechanismus zu reduzieren.

Die Achse ist in am Fahrgestell 2 montierten oder ausgebildeten Gleitlagern 19 gehalten, die jeweils eine rechtwinklig zur Drehachse der Achse 17 verlaufende langlochförmige Öffnung 20 aufweisen. Die Lager 19 sind an den inneren Längsträgern 2.7, 2.8 befestigt. Die Längsachse der langlochförmigen Öffnung 20 erstreckt sich vertikal. Die Enden der Achse 17 sind in an den äußeren Längsträgern 2.1, 2.2 befestigten Lagern 21 gehalten, die vorzugsweise als Wälzlager, beispielsweise als Kugel-Stehlager ausgeführt sind.

An jedem der beiden Enden der Achse 17 sind zwei Fußhebel (Pedale) 22, 23 befestigt. Die Fußhebel sind unterschiedlich zueinander abgewinkelt und zwischen dem Gleitlager 18 und dem mit dem Längsträger 2.1 bzw. 2.2 verbundenen Lager (Kugel-Stehlager) 21 mit der Achse 17 drehstarr verbunden. Die Position der Achse 17 bzw. der Lager 18, 21 ist vorzugsweise so gewählt, dass die Achse 17 mittig zwischen den inneren oder äußeren Querträgern 2.5, 2.6 bzw. 2.3, 2.4 unter dem Fahrgestell 2 angeordnet ist. Die Achse 17 kann daher auch als Mittelachse bezeichnet werden.

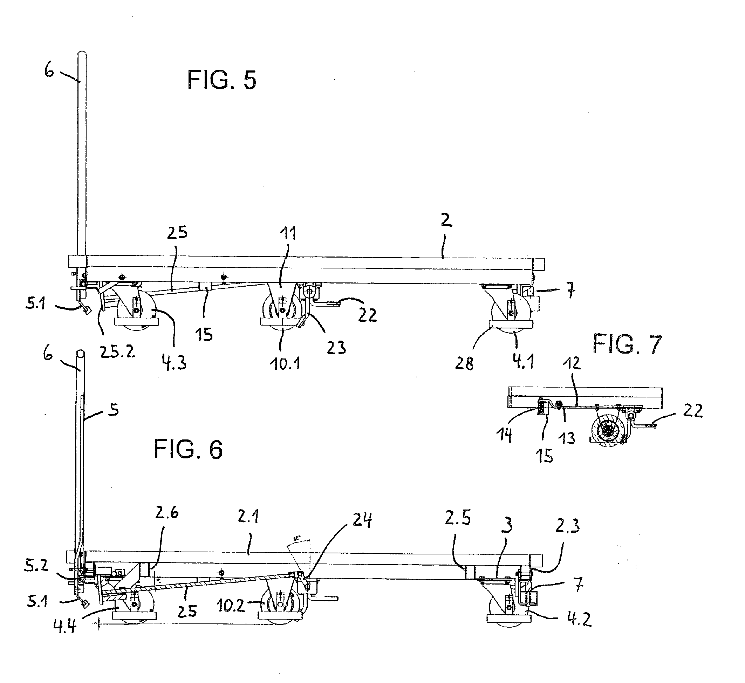

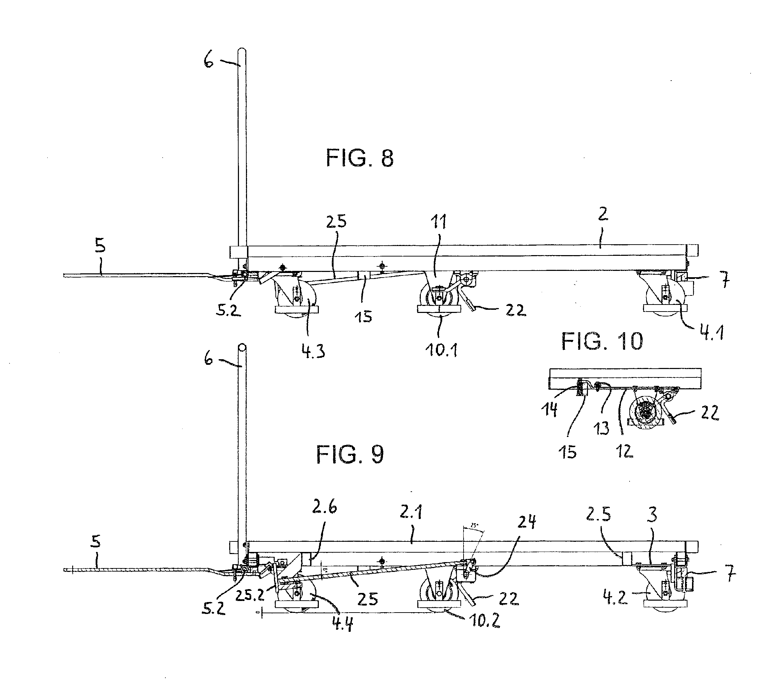

An der Achse (Mittelachse) 17 ist ein radial abstehender Hebel 24 befestigt, an dem eine Schubstange 25 angelenkt ist. Die Schubstange 25 ist hierzu mit einer Gelenkgabel 25.1 versehen, die den Hebel 24 umgreift. Die Schubstange 25 erstreckt sich vom Hebel 24 in Richtung zur Deichsel 5, wobei sie verschiebbar in einem am inneren Querträger 2.6 befestigten Lagerbock 26 gehalten ist. Die Längsachsen des Hebels 24 und der Schubstange 25 sind so zueinander ausgerichtet, dass sie in der angehobenen Position der nicht-lenkbeweglichen Laufrollen 10.1, 10.2 einen stumpfen Winkel einschließen, und in der abgesenkten Position (Kontaktposition) der Laufrollen einen spitzen Winkel einschließen. Das den Hebel 24 mit der Schubstange 25 verbindende Gelenk 27 wird beim Anheben der mittleren Laufrollen 10.1, 10.2 vom Boden in die angehobene Position über einen Totpunkt bewegt. In Fig. 6 ist dargestellt, dass die Längsachse des von der Mittelachse 17 abstehenden Hebels 24 bei angehobener Position der Laufrollen 10.1, 10.2 um etwa 30° gegenüber der Vertikalen in Richtung der Deichsel 5 geneigt ist. Bei den Boden berührender Position der nicht-lenkbeweglichen Laufrollen 10.1, 10.2 ist die Längsachse des Hebels 24 dagegen um etwa 25° gegenüber der Vertikalen in Richtung der Anhängekupplung 7 geneigt (vgl. Fig. 9).

Je einer der beiden an dem jeweiligen Ende der Mittelachse 17 befestigten Fußhebel 22, 23 ist der angehobenen Position bzw. der abgesenkten Position der nicht-lenkbeweglichen Laufrollen 10.1, 10.2 zugeordnet. Die Fußhebel 22, 23 sind so zueinander abgewinkelt, dass die obere Pedalfläche eines der beiden Fußhebel 22, 23 in der angehobenen Position oder der abgesenkten Position der Laufrollen 10.1, 10.2 im Wesentlichen horizontal verläuft (vgl. Fig. 5 und 8).

An dem der Deichsel 5 zugewandten Ende der Schubstange 25 ist ein Anschlagelement oder Mitnehmer 25.2 befestigt, das bzw. der mit einem an der Deichsel befestigten oder ausgebildeten Hebelarm 5.1 zusammenwirkt. In der aufrechten Stellung der Deichsel 5 erstreckt sich der Hebelarm 5.1 von der Drehlagerung 5.2 der Deichsel aus nach unten (vgl.
Fig. 3 und 6).

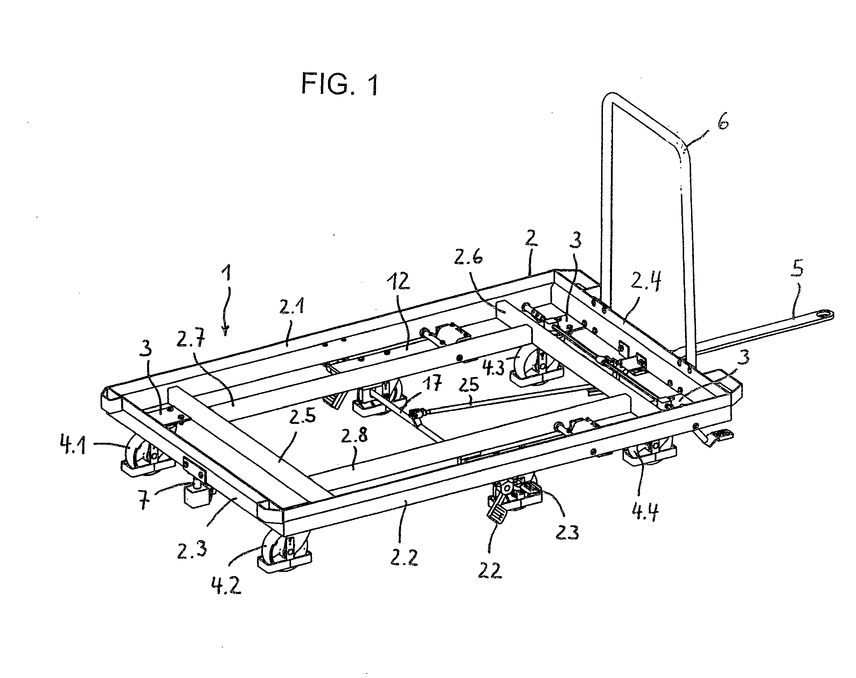

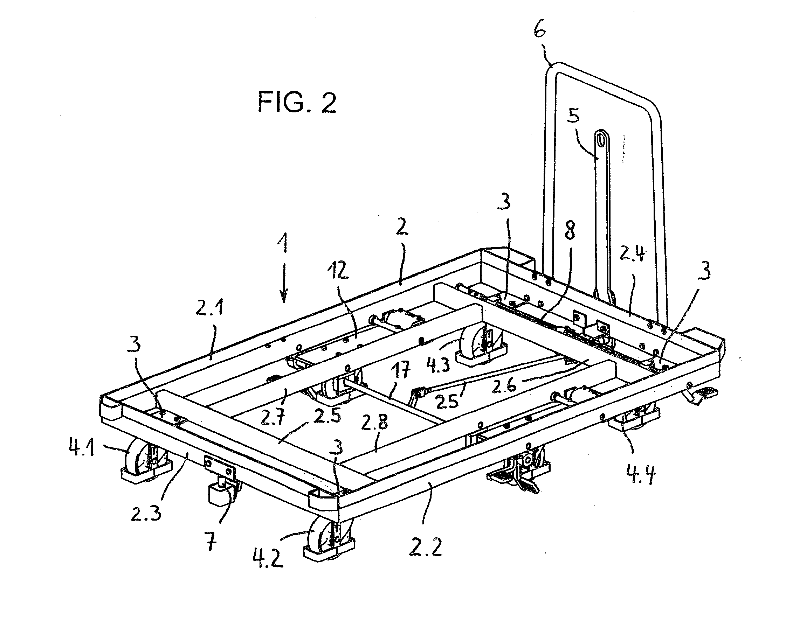

Wird die Deichsel 5 aus der aufrechten Stellung in die Zugstellung gemäß den Figuren 1 und 9 geschwenkt, so gelangt deren Hebelarm 5.1 mit dem Anschlag bzw. Mitnehmer 25.2 der Schubstange 25 in Kontakt und verschiebt diese in Richtung der Mittelachse 17, wobei das Gelenk 27, welches der an der Mittelachse befestigte Hebel 24 und die Schubstange 25 bilden, über die Vertikalebene, in welcher die Mittelachse 17 liegt, hinweg bewegt wird. Der Hebe- und Absenkmechanismus für die nicht-lenkbeweglichen Laufrollen 10.1, 10.2 ist mit der Deichsel 5 somit derart gekoppelt ist, dass die Laufrollen 10.1, 10.2 durch Herabschwenken der Deichsel 5 aus der aufrechten Stellung in die Zugstellung in die den Boden berührende Position bewegt werden. Die Deichsel 5 ist vorzugsweise mit einer Feder, beispielsweise einer Spiralfeder versehen, die bewirkt, dass die Deichsel 5 nach Abtrennen von einer Anhängekupplung 7 eines entsprechenden Transportwagens automatisch in die aufrechte Stellung gemäß Fig. 2 geschwenkt wird.

Die Lenkrollen 4.1, 4.2, 4.3, 4.4 sowie die mittleren Laufrollen 10.1, 10.2 sind in dem dargestellten Ausführungsbeispiel mit umlaufenden Überfahrschutzbügeln 28 versehen.

Die Ausführung des erfindungsgemäßen Transportwagens 1 ist nicht auf das vorstehend beschriebene Ausführungsbeispiel beschränkt. Vielmehr sind zahlreiche Varianten denkbar, die auch bei von dem dargestellten Ausführungsbeispiel abweichender Gestaltung von der in den Ansprüchen angegebenen Erfindung Gebrauch machen. So liegt es beispielsweise auch im Rahmen der Erfindung, jeder der Lenkrollen 4.1, 4.2, 4.3, 4.4 mit einer einzelnen Feststellbremse zu versehen.

## Patentansprüche

1. Transportwagen (1) mit einem mindestens drei, vorzugsweise mindestens vier Lenkrollen (4.1, 4.2, 4.3, 4.4) aufweisenden Fahrgestell und mindestens zwei nicht-lenkbeweglichen Laufrollen (10.1, 10.2), die mittels eines am Fahrgestell (2) gelagerten Hebe- und Absenkmechanismus aus einer Kontaktposition, in welcher sie eine Fahrfläche berühren, auf welcher sich die Lenkrollen (4.1, 4.2, 4.3, 4.4) abstützen, in eine angehobene Position, in welcher sie die Fahrfläche nicht berühren, anhebbar und umgekehrt absenkbar sind, **dadurch gekennzeichnet, dass** der Hebe- und Absenkmechanismus mit mindestens einer Einstellvorrichtung (14, 16) versehen ist, mittels welcher der Anpressdruck mindestens einer der nicht-lenkbeweglichen Laufrollen (10.1, 10.2) gegen die Fahrfläche einstellbar ist, wobei der Hebe- und Absenkmechanismus mindestens einen Träger (12) umfasst, der wippenartig an dem Fahrgestell (2) gelagert ist und Hebelarme (12.1, 12.2) definiert, wobei an einem der Hebelarme (12.1) mindestens eine der nicht-lenkbeweglichen Laufrollen (10.1, 10.2) montiert ist und an einem anderen der Hebelarme (12.2) die mindestens eine Einstellvorrichtung (16) zum Einstellen des Anpressdruckes angreift.

2. Transportwagen nach Anspruch 1,
**dadurch gekennzeichnet, dass** der Hebe- und Absenkmechanismus mit einer an dem Fahrgestell (2) schwenkbar gelagerten Deichsel (5) derart gekoppelt ist, dass die mindestens eine nicht-lenkbewegliche Laufrolle (10.1, 10.2) durch Herabschwenken der Deichsel (5) aus einer aufrechten Stellung in eine Zugstellung in die Kontaktposition bewegbar ist.

3. Transportwagen nach Anspruch 1 oder 2,
**dadurch gekennzeichnet, dass** der Hebe- und Absenkmechanismus mit mindestens einer Druckfeder (14) versehen ist, welche die mindestens eine nicht-lenkbewegliche Laufrolle (10.1, 10.2) gegen die Fahrfläche vorspannt.

4. Transportwagen nach einem der Ansprüche 1 bis 3,
**dadurch gekennzeichnet, dass** der Hebe- und Absenkmechanismus eine Achse (17) umfasst, die drehbar an dem Fahrgestell (2) gelagert ist und einen Nocken (18) trägt, der an dem die mindestens eine nicht-lenkbewegliche Laufrolle (10.1, 10.2) tragenden Träger (12) angreift, wobei an der Achse (17) ein davon radial abstehender Hebel (24) befestigt ist, an dem eine Schubstange (25) angelenkt ist, und wobei das den Hebel (24) mit der Schubstange (25) verbindende Gelenk (27) beim Anheben der Laufrolle (10.1, 10.2) aus der Kontaktposition in die angehobene Position über einen Totpunkt bewegt wird.

5. Transportwagen nach Anspruch 4,
**dadurch gekennzeichnet, dass** an der drehbar gelagerten Achse (17) mindestens ein, vorzugsweise mindestens zwei unterschiedlich zueinander abgewinkelte Fußhebel (22, 23) drehstarr befestigt sind.

6. Transportwagen nach Anspruch 4 oder 5,
**dadurch gekennzeichnet, dass** die Achse (17) in an dem Fahrgestell (2) montierten oder ausgebildeten Gleit- und/oder Wälzlagern (19, 21) gehalten ist.

7. Transportwagen nach einem der Ansprüche 1 bis 6, **dadurch gekennzeichnet, dass** mindestens eine der Lenkrollen (4.3, 4.4) mit einer durch ein Pedal (8.1, 8.2) betätigbaren Bremse versehen ist.

8. Transportwagen nach einem der Ansprüche 1 bis 7, **dadurch gekennzeichnet, dass** das Fahrgestell (2) mit mindestens einem nach oben ragenden, stiel- oder bügelförmig ausgebildeten Handgriff (6) versehen ist.

9. Transportwagen nach einem der Ansprüche 1 bis 8, **dadurch gekennzeichnet, dass** der Hebe- und Absenkmechanismus mindestens zwei Träger (12) umfasst, die jeweils wippenartig an dem Fahrgestell (2) gelagert sind und jeweils mindestens zwei Hebelarme (12.1, 12.2) definieren, wobei an dem einen Hebelarm (12.1) des jeweiligen Trägers (12) eine der nicht-lenkbeweglichen Laufrollen (10.1, 10.2) montiert ist und an dem anderen Hebelarm (12.2) des jeweiligen Trägers (12) eine Einstellvorrichtung (16) zum Einstellen des Anpressdruckes angreift.

10. Transportwagen nach Anspruch 9,
**dadurch gekennzeichnet, dass** die Träger (12) mittels voneinander getrennter Achsen (13) schwenkbar am Fahrgestell (2) gelagert sind.

11. Transportwagen nach einem der Ansprüche 1 bis 10, **dadurch gekennzeichnet, dass** die Lenkrollen (4.1, 4.2, 4.3, 4.4) unabhängig von dem mindestens einen die nicht-lenkbeweglichen Laufrollen (10.1, 10.2) tragenden Träger (12) an dem Fahrgestell (2) montiert sind.

## Claims

1. Transport trolley (1) with a chassis having at least three, preferably at least four, castors (4.1, 4.2, 4.3, 4.4) and at least two non-steerably movable rollers (10.1, 10.2), which can be lifted and, conversely, lowered by means of a lifting and lowering mechanism mounted on the chassis (2) from a contact position, in which they touch a travelling surface, on which the castors (4.1, 4.2, 4.3, 4.4) are supported, into a raised position, in which they do not touch the travelling surface, **characterised in that** the lifting and lowering mechanism is provided with at least one adjusting device (14, 16), by means of which the contact pressure of at least one of the non-steerably movable rollers (10.1, 10.2) can be adjusted against the travelling surface, the lifting and lowering mechanism comprising at least one carrier (12), which is mounted in a rocker-like manner on the chassis (2) and defines lever arms (12.1,12.2), at least one of the non-steerably moveable rollers (10.1, 10.2) being mounted on one of the lever arms (12.1) and the at least one adjusting device (16) engaging on another one of the lever arms (12.2) to adjust the contact pressure.

2. Transport trolley according to claim 1, **characterised in that** the lifting and lowering mechanism is coupled to a drawbar (5), which is pivotably mounted on the chassis (2), in such a way that the at least one non-steerably movable roller (10.1,10.2) can be moved into the contact position by pivoting the drawbar (5) down from an upright position into a pulling position.

3. Transport trolley according to either claim 1 or claim 2, **characterised in that** the lifting and lowering mechanism is provided with at least one compression spring (14), which prestresses the at least one non-steerably movable roller (10.1, 10.2) against the travelling surface.

4. Transport trolley according to any one of claims 1 to 3, **characterised in that** the lifting and lowering mechanism comprises an axle (17), which is rotatably mounted on the chassis (2) and carries a cam (18), which engages on the carrier (12) carrying the at least one non-steerably movable roller (10.1, 10.2), wherein fastened on the axle (17) is a lever (24) projecting radially therefrom, on which a push rod (25) is articulated, and the joint (27) connecting the lever (24) to the push rod (25), on lifting the roller (10.1, 10.2), being moved out of the contact position into the raised position via a dead centre.

5. Transport trolley according to claim 4, **characterised in that** at least one, preferably at least two, foot levers (22, 23) that are angled differently from one another are torsionally rigidly fastened on the rotatably mounted axle (17).

6. Transport trolley according to either claim 4 or claim 5, **characterised in that** the axle (17) is held in sliding and/or rolling bearings (19, 21) mounted or configured on the chassis (2).

7. Transport trolley according to any one of claims 1 to 6, **characterised in that** at least one of the castors (4.3, 4.4) is provided with a brake that can be actuated by a pedal (8.1, 8.2).

8. Transport trolley according to any one of claims 1 to 7, **characterised in that** the chassis (2) is provided with at least one handle (6) projecting upwardly and configured in a shaft or frame shape.

9. Transport trolley according to any one of claims 1 to 8, **characterised in that** the lifting and lowering mechanism comprises at least two carriers (12), which are in each case mounted in the manner of a rocker on the chassis (2) and in each case define at least two lever arms (12.1, 12.2), one of the non-steerably moveable rollers (10.1,10.2) being mounted on the one lever arm (12.1) of the respective carrier (12) and an adjusting device (16) to adjust the contact pressure engaging on the other lever arm (12.2) of the respective carrier (12).

10. Transport trolley according to claim 9, **characterised in that** the carriers (12) are pivotably mounted on the chassis (2) by means of axles (13) that are separate from one another.

11. Transport trolley according to any one of claims 1 to 10, **characterised in that** the castors (4.1, 4.2, 4.3, 4.4) are mounted on the chassis (2) independently of the at least one carrier (12) carrying the non-steerably moveable rollers (10.1, 10.2).

## Revendications

1. Chariot de transport avec un châssis équipé d'au moins trois, de préférence quatre roues directrices (4.1, 4.2, 4.3, 4.4) et d'au moins deux roues non directrices (10.1, 10.2) qui, au moyen d'un mécanisme de levage et de descente monté sur le châssis (2), peuvent être soulevées et, inversement, abaissées d'une position de contact, dans laquelle elles sont en contact avec une surface de roulement sur laquelle les roues directrices (4.1, 4.2, 4.3, 4.4) prennent appui, dans une position de levage, dans laquelle elles ne touchent pas la surface de roulement,
**caractérisé en ce que** le mécanisme de levage et de descente est doté d'au moins un dispositif de réglage (14, 16) au moyen duquel la pression d'appui d'au moins l'une des roues non directrices (10.1, 10.2) sur la surface de roulement peut être réglée, sachant que le mécanisme de levage et de descente est doté d'au moins un support (12) qui est monté, à la manière d'une bascule, sur le châssis (2) et définit des bras de levier (12.1, 12.2), sachant que, sur l'un des bras de levier (12.1), est montée au moins l'une des roues non directrices (10.1,10.2) et que le dispositif de réglage (16) agit sur l'autre bras de levier (12.2) pour régler la pression d'appui.

2. Chariot de transport selon la revendication 1,
**caractérisé en ce que** le mécanisme de levage et de descente est couplé avec un timon (5), qui est monté à pivotement sur le châssis (2), de telle manière que la roue non directrices (10.1, 10.2) au moins prévue puisse être mue par pivotement vers le bas du timon (5) à partir d'une position debout en position de traction dans la position de contact.

3. Chariot de transport selon l'une des revendications 1 ou 2,
**caractérisé en ce que** le mécanisme de levage et de descente est pourvu d'au moins un ressort de pression (14) qui précontraint au moins l'une des roues non directrices (10.1, 10.2) contre la surface de roulement.

4. Chariot de transport selon l'une des revendications 1 à 3,
**caractérisé en ce que** le mécanisme de levage et de descente comprend un axe (17) qui est monté à rotation sur le châssis (2) et porte une came (18) qui attaque le support (12) portant la roues non directrice (10.1, 10.2) au moins prévue, sachant qu'à l'axe (17) est fixé, à distance radiale de celui-ci, un levier (24) sur lequel une bielle (25) est articulée, et sachant que l'articulation (27), qui relie le levier (24) à la bielle (25), est mue au-delà d'un point mort lors du soulèvement de la roue (10.1, 10.2) de la position de contact à la position levée.

5. Chariot de transport selon la revendication 4,
**caractérisé en ce que**, sur l'axe (17) monté à rotation, au moins une pédale, de préférence deux pédales (22, 23), coudées différemment l'une par rapport à l'autre, est/ sont fixée/s de manière rigide à la torsion.

6. Chariot de transport selon revendication 4 ou 5,
**caractérisé en ce que** l'axe (17) est maintenu dans des paliers à glissement et / ou des paliers à roulement (19, 21) qui sont montés ou formés sur le châssis (2).

7. Chariot de transport selon l'une des revendications 1 à 6,
**caractérisé en ce que** l'une des roues (4.3, 4.4) au moins est pourvue d'un frein qui peut être actionné au moyen d'une pédale (8.1, 8.2).

8. Chariot de transport selon l'une des revendications 1 à 7,
**caractérisé en ce que** le châssis (2) est pourvu d'au moins une poignée (6) en forme de manche ou d'étrier qui fait saillie vers le haut.

9. Chariot de transport selon l'une des revendications 1 à 8,
**caractérisé en ce que** le mécanisme de levage et de descente comprend au moins deux supports (12), qui sont montés chacun à la manière d'une bascule, sur le châssis (2) et définissent respectivement deux bras de levier (12.1, 12.2), sachant que sur l'un des bras de levier (12.1) du support (12) respectif est montée l'une des roues non directrices (10.1, 10.2) et que l'autre bras de levier (12.2) du support (12) respectif est attaqué par un dispositif de réglage (16) pour régler la pression d'appui.

10. Chariot de transport selon la revendication 9,
**caractérisé en ce que** les supports (12) sont montés à pivotement sur le châssis (2) au moyen d'axes (13) séparés l'un de l'autre.

11. Chariot de transport selon l'une des revendications 1 à 10,
**caractérisé en ce que** les roues directrices (4.1, 4.2, 4.3, 4.4) sont montées sur le châssis (2) indépendamment du support (12) au moins prévu, qui porte les roues non directrices (10.1, 10.2).
